# EUROPÄISCHE PATENTSCHRIFT

(11) **EP 2 768 676 B1**
(45) Veröffentlichungstag und Bekanntmachung des Hinweises auf die Patenterteilung: **07.06.2017**
(21) Anmeldenummer: 12773207.1
(22) Anmeldetag: 24.09.2012
(51) Int. Cl.: B41M 3/14, B41M 5/28, B42D 25/00, B42D 25/29, B42D 25/41, C09D 11/037, C09D 11/50

(54) **OPTISCH VARIABLES SICHERHEITSELEMENT MIT MIKROKAPSELNBASIERTER FARBSCHICHT**
OPTICALLY VARIABLE SECURITY ELEMENT WITH AN INK LAYER BASED ON MICROCAPSULES
ÉLÉMENT DE SÉCURITÉ OPTIQUEMENT VARIABLE AVEC UNE COUCHE D'ENCRE SUR LA BASE DE MICROCAPSULES

(30) Priorität: 20.10.2011 DE 102011116490
(43) Veröffentlichungstag der Anmeldung: 27.08.2014
(73) Patentinhaber: Giesecke & Devrient GmbH, 81677 München (DE)
(72) Erfinder: BORNSCHLEGL, Alexander, 81735 München (DE); MENGEL, Christoph, 83607 Holzkirchen (DE)
(86) Internationale Anmeldenummer: PCT/EP2012/003982
(87) Internationale Veröffentlichungsnummer: WO 2013/056777

(56) Entgegenhaltungen:
- WO-A1-2010/142391
- WO-A2-2009/074284
- DE-A1-102008 008 440

## Beschreibung

Die Erfindung betrifft ein optisch variables Sicherheitselement mit einer mikrokapselbasierten Farbschicht. Die Erfindung betrifft ferner ein Verfahren zur Herstellung eines derartigen Sicherheitselements, eine Sicherheitsanordnung mit einem solchen Sicherheitselement und einen entsprechend ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Für diesen Zweck werden seit einiger Zeit auch verkapselte magnetisch ausrichtbare Effektpigmente eingesetzt, die magnetisch in Form eines darzustellenden Motivs ausgerichtet werden können. WO 2010/142391 A1 zeigt Mikrokapseln mit magnetischen Nanopartikeln und DE 10 2008 008 440 A1 Mikrokapseln mit mittels mechanischer Kräfte beeinflussbarem Inhalt. WO 2009/074284 A2 zeigt den Oberbegriff von Anspruch 1.

Ausgehend davon liegt der Erfindung die Aufgabe zugrunde, optisch variable Sicherheitselemente mit einer mikrokapselbasierten Farbschicht weiter zu verbessern und insbesondere, optisch variable Sicherheitselemente mit attraktivem visuellem Erscheinungsbild und hoher Fälschungssicherheit anzugeben.

Diese Aufgabe wird durch die Merkmale der unabhängigen Ansprüche gelöst. Weiterbildungen der Erfindung sind Gegenstand der Unteransprüche.

Die Erfindung offenbart ein Verfahren zur Herstellung eines optisch variablen Sicherheitselements mit einer mikrokapselbasierten Farbschicht mit einem Motivbereich in Form von Mustern, Zeichen oder einer Codierung. Bei dem Verfahren ist vorgesehen, dass
D) eine Druckfarbe bereitgestellt wird, die in einem Bindemittel eine Vielzahl von Mikrokapseln enthält, die jeweils eine Kapselhülle, eine in der Kapselhülle eingeschlossene Trägerflüssigkeit und ein magnetisch ausrichtbares, nicht-sphärisches Pigment aufweisen, welches in der Mikrokapsel im Wesentlichen frei drehbar und durch ein externes Magnetfeld reversibel ausrichtbar ist,
A) die Druckfarbe auf einen Untergrund aufbracht wird um eine mikrokapselbasierte Farbschicht zu bilden,
M) in einem den Motivbereich enthaltenden Teilbereich der Farbschicht ein externes Magnetfeld angelegt wird, um dort die drehbaren Pigmente in den Mikrokapseln auszurichten, und
B) in dem Motivbereich die Kapselhüllen der Mikrokapseln beschädigt werden, so dass die Trägerflüssigkeit aus den Mikrokapseln austritt und die Pigmente unbeweglich in den beschädigten Kapselhüllen zurückbleiben.

Dabei stellt jede Beeinträchtigung der Integrität der Kapselhülle, die zum Austreten von Trägerflüssigkeit führt, eine Beschädigung der Kapselhülle dar. Beispielsweise kann ein Teilbereich der Kapselhülle vollständig zerstört werden, Löcher in der Kapselhülle erzeugt werden, oder die Kapselhülle kann aufreißen oder aufplatzen.

Mit Vorteil werden die Kapselhüllen im Schritt B) durch Einwirkung von Laserstrahlung, insbesondere durch gepulste Laserstrahlung im nahen Infrarot beschädigt. Durch den Einsatz von Laserstrahlung können sehr feine Motivbereiche beliebiger Form erzeugt werden, da die Laserstrahlung bei Bedarf auf einen kleinen Fokusfleck fokussiert werden kann. Die erreichbare Auflösung liegt daher im Bereich von nur wenigen Mikrometern. Anstelle der bevorzugten Laserstrahlung können selbstverständlich auch andere elektromagnetische Strahlungsquellen eingesetzt werden. In allen Gestaltungen kann die Strahlungsbeaufschlagung vollflächig unter Einsatz einer Maske mit den vorgegebenen, für die Strahlung durchlässigen Bereichen zur Beschädigung der Mikrokapseln eingesetzt werden, oder die Beschädigung der Mikrokapseln kann selektiv durch Führung eines geeignet gebündelten Strahls erfolgen.

Neben der derzeit bevorzugten Beschädigung der Kapselhüllen durch Einwirkung von Laserstrahlung, sind selbstverständlich auch andere Techniken zur Beschädigung denkbar. Beispielsweise können die Mikrokapseln durch Ausübung eines ausreichend großen Drucks, insbesondere mittels eines Werkzeugs beschädigt werden. Dabei ist z.B. an eine Beaufschlagung der Mikrokapseln mittels geeignet ausgebildeter Druckplatten, insbesondere Tiefdruckplatten und ganz besonders bevorzugt Stichtiefdruckplatten zu denken. Der bereichsweise Einsatz solcher Tiefdruck- bzw. Stichtiefdruckplatten ermöglicht es, die Mikrokapseln selektiv in bestimmten Bereichen zu beschädigen, während die Mikrokapseln in anderen Bereichen unbeschädigt bleiben. Darüber hinaus ist eine solche Beschädigungsart deshalb von Vorteil, weil eine Tiefdruck- bzw. Stichtiefdruckplatte in der Regel ohnehin bei der Herstellung von z.B. Wertdokumenten, die das erfindungsgemäße Sicherheitselement aufweisen, eingesetzt wird. Im Übrigen könnte bei Einsatz eines solchen Werkzeugs zur Ausübung von Druck zur Beschädigung von Mikrokapseln auch auf eine Laseranlage zur Herstellung des Sicherheitselementes verzichtet werden und auf im Bereich der Sicherheitselemente bereits vorhandene Techniken, insbesondere die Tiefdrucktechnik, zurückgegriffen werden.

In einer vorteilhaften Verfahrensvariante werden die Kapselhüllen der Mikrokapseln beschädigt, während das externe Magnetfeld angelegt ist. In anderen, ebenfalls vorteilhaften Varianten kann das externe Magnetfeld auch unmittelbar vor oder unmittelbar nach der Beschädigung der Kapselhüllen angelegt werden. Die Angaben "unmittelbar vor" und "unmittelbar nach" bezeichnen dabei Zeiten, die sich von dem Beschädigungszeitpunkt um weniger als eine Relaxationszeit der Pigmente bzw. um weniger als die Austrittdauer der Trägerflüssigkeit unterscheiden. Wird das externe Magnetfeld unmittelbar vor der Beschädigung der Kapselhüllen angelegt, so sind die Pigmente bei der Beschädigung noch weitgehend ausgerichtet. Wird das externe Magnetfeld unmittelbar nach der Beschädigung der Kapselhüllen angelegt, so ist noch genügend Trägerflüssigkeit im Kapselinnern vorhanden, um eine für die Ausrichtung der Pigmente ausreichende Beweglichkeit sicherzustellen. Dabei versteht es sich, dass das Anlegen des externen Magnetfelds unmittelbar vor oder unmittelbar nach der Beschädigung der Kapselhüllen sich auf die Fixierung der Magnetpigmente in gewissem Umfang auswirkt, so dass je nach den Vorgaben für das zu realisierende Sicherheitselement das externe Magnetfeld unmittelbar vor oder unmittelbar nach der Beschädigung der Kapselhüllen angelegt werden kann. Des Weiteren ist in einer besonders bevorzugten Ausführungsform vorgesehen, dass das externe Magnetfeld unmittelbar vor der Beschädigung der Kapselhüllen angelegt wird und zumindest während eines Zeitraums während der Beschädigung der Kapselhüllen angelegt bleibt. Das externe Magnetfeld kann dabei auch während des gesamten Zeitraumes der Beschädigung der Kapselhüllen angelegt bleiben, was im Ergebnis der bereits erwähnten vorteilhaften Verfahrensvariante entspricht, bei der die Kapselhüllen der Mikrokapseln beschädigt werden, während das externe Magnetfeld angelegt ist.

Bei einer zweckmäßigen Verfahrensvariante werden die drehbaren Pigmente im Schritt M) zumindest in einem Teil des Motivbereichs parallel zur Ebene der Farbschicht ausgerichtet und werden im Schritt B) in dieser Ausrichtung durch Beschädigung der Kapselhüllen fixiert. Die parallele Ausrichtung erzeugt durch ein Zusammenwirken der Pigmente für den Betrachter einen brillanten optischen Effekt.

Nach einer anderen, ebenfalls zweckmäßigen Verfahrensvariante werden die drehbaren Pigmente im Schritt M) zumindest in einem Teil des Motivbereichs senkrecht zur Ebene der Farbschicht ausgerichtet und werden im Schritt B) durch Beschädigung der Kapselhüllen in im Wesentlichen senkrechter Ausrichtung fixiert. Die senkrechte Ausrichtung gibt für den Betrachter den Blick auf den unter der Farbschicht liegenden Untergrund, beispielsweise eine farbige oder informationsführende Schicht, frei.

Erfolgt die Beschädigung der Kapselhüllen durch Einwirkung von Laserstrahlung, so wird im Schritt D) mit Vorteil eine Druckfarbe bereitgestellt, bei der das Material der Kapselhüllen und/ oder die Trägerflüssigkeit einen Absorber für die zur Beschädigung der Kapselhüllen eingesetzte Laserstrahlung enthält. Es ist dabei auch von Vorteil, wenn im Schritt D) eine Druckfarbe bereitgestellt wird, deren Bindemittel bei der Wellenlänge der zur Beschädigung der Kapselhüllen eingesetzten Laserstrahlung transparent ist. In allen Gestaltungen wird mit Vorteil im Schritt A) zunächst eine Untergrundschicht auf ein Substrat aufgebracht, vorzugsweise in Form einer Information, insbesondere einem Muster, Zahlen und/oder Buchstaben, einem Portrait oder dergleichen. Die Druckfarbe wird dann zur Bildung der mikrokapselbasierten Farbschicht auf diese Untergrundschicht aufgebracht.

Mit besonderem Vorteil wird die Druckfarbe im Schritt A) im Sieb- oder Flexodruck aufgebracht. Vorzugsweise enthält die Druckfarbe einen hohen Anteil an Mikrokapseln. Dabei ist ein Anteil an Mikrokapseln in der Druckfarbe von 10 Gew.-% bis 60 Gew.-%, insbesondere von 15 Gew.-% bis 35 Gew.-%, bevorzugt.

Die Erfindung enthält auch ein optisch variables Sicherheitselement zur Absicherung von Wertgegenständen mit einer mikrokapselbasierten Farbschicht, die in einem Bindemittel eine Vielzahl von Mikrokapseln enthält, die jeweils eine Kapselhülle, eine in der Kapselhülle eingeschlossene Trägerflüssigkeit und ein magnetisch ausrichtbares, nicht-sphärisches Pigment aufweisen, welches in der Mikrokapsel im Wesentlichen frei drehbar und durch ein externes Magnetfeld reversibel ausrichtbar ist. Die mikrokapselbasierte Farbschicht enthält einen Motivbereich mit unterschiedlichem visuellem Eindruck, der in Form von Mustern, Zeichen oder einer Codierung ausgebildet ist, und in dem die Kapselhüllen der Mikrokapseln beschädigt sind, die Trägerflüssigkeit aus den Kapselhüllen ausgetreten ist und die Pigmente unbeweglich in den beschädigten Kapselhüllen vorliegen.

Bevorzugt sind die Pigmente plättchenförmig ausgebildet, wobei das Verhältnis des größten zum kleinsten Durchmesser (Durchmesser-zu-Dickenverhältnis) der plättchenförmigen Pigmente mehr als 4:1, bevorzugt mehr als 10:1 beträgt und besonders bevorzugt zwischen 20:1 und 200:1 liegt. Der größte Durchmesser der plättchenförmigen Pigmente liegt bevorzugt zwischen 2 µm und 150 µm, insbesondere zwischen 5 µm und 50 µm.

In einer bevorzugten Ausführungsform ist vorgesehen, dass die Pigmente durch eine geeignete Behandlung, insbesondere der Beschichtung der Oberfläche der Pigmente, stabilisiert werden, so dass die magnetischen und optisch variablen Eigenschaften der erfindungsgemäßen Pigmente möglichst lange aufrechterhalten werden können. Denkbar ist es ferner, die Mikrokapseln im Allgemeinen bzw. die Pigmente im Speziellen durch einen der Trägerflüssigkeit zugesetzten Stabilisator zu stabilisieren.

Die Mikrokapseln selbst weisen einen Durchmesser zwischen 1 µm und 200 µm, vorzugsweise zwischen 2 µm und 80 µm auf. Es versteht sich, dass der Durchmesser der Mikrokapseln mit Vorteil auf die Größe der verkapselten Pigmente abgestimmt ist. Die Wandstärke der Mikrokapseln liegt typischerweise zwischen 2 % und 30 %, vorzugsweise zwischen 5 % und 15% des Durchmessers der Mikrokapseln.

Die mikrokapselbasierte Farbschicht ist mit Vorteil auf einer informationsführenden Untergrundschicht, insbesondere einer Siebdruck-, Flexodruck- oder Stichtiefdruckschicht aufgebracht. Alternativ oder zusätzlich kann die mikrokapselbasierte Farbschicht mit einer thermochromen oder magnetischen Untergrundschicht kombiniert sein.

Die unbeweglichen Pigmente in dem Motivbereich sind vorzugsweise zumindest teilweise parallel und/oder zumindest teilweise senkrecht zur Ebene der Farbschicht ausgerichtet.

Die Mikrokapseln können selbstverständlich mehrere Pigmente enthalten, beispielsweise ein magnetisch ausrichtbares und ein optisch variables Pigment. Es können in einem Sicherheitselement auch verkapselte Pigmente mit unterschiedlichen Eigenschaften, insbesondere unterschiedlichen magnetischen Eigenschaften oder unterschiedlicher Wechselwirkungsstärke mit der eingesetzten Strahlung verwendet werden, so dass durch unterschiedliche starke Strahlung oder durch die unterschiedlichen Eigenschaften der Pigmente erste und zweite Informationen in das Sicherheitselement eingebracht werden können.

In allen Varianten der vorliegenden Erfindung kann eine transluzente bzw. transparente Trägerflüssigkeit eingesetzt werden. Während eine opake Trägerflüssigkeit die Wahrnehmung der in den Mikrokapseln eingeschlossenen Pigmente in der Regel erheblich beeinträchtigt, können sich in dem Bereich beschädigter Kapselhüllen (Motivbereich) auch interessante, den Wiedererkennungswert des Sicherheitselements steigernde Farbeffekte ergeben. Besonders bevorzugt sind derzeit allerdings Mikrokapseln mit einer transparenten Trägerflüssigkeit, da diese eine besonders gute Wahrnehmung der Pigmente durch den Betrachter im Bereich beschädigter Mikrokapseln (Motivbereich) und im Bereich außerhalb des Motivbereichs ermöglicht. Der sehr hohe Wiedererkennungswert steigert daher bei solchen Ausführungsformen den Fälschungsschutz des Sicherheitselementes noch weiter.

Bei obiger Diskussion der Trägerflüssigkeit versteht es sich im Hinblick auf die Kapselhülle, dass diese transparent oder transluzent ausgebildet sein muss, um die Wahrnehmung der Trägerflüssigkeit bzw. der magnetisch ausrichtbaren Pigmente für den Betrachter zu ermöglichen.

Im Rahmen der vorliegenden Erfindung wird unter einem "transparenten" Material ein Material verstanden, das einfallende elektromagnetische Strahlung zumindest im sichtbaren Wellenlängenbereich von ca. 380 nm bis ca. 780 nm im Wesentlichen vollständig hindurchlässt. Bei einem "transparenten" Material im Rahmen der vorliegenden Erfindung, insbesondere einer "transparenten" Trägerflüssigkeit, ist der Transmissionsgrad T ≥ 0,8, wobei T als Quotient der durch das Material hindurch gelassenen Strahlungsleistung L und der auf das Substrat eingestrahlten Strahlungsleistung Lo definiert ist. Diese exakte Definition des Transmissionsgrades (T = L/L₀) entspricht der im "Lexikon der Optik", Spektrum Akademischer Verlag, Heidelberg 2003, Band 2, Seite 366, Begriff "Transmissionsgrad" gegebenen Definition.

Ein "opakes" bzw. "undurchsichtiges" Material weist im Rahmen der vorliegenden Erfindung einen Transmissionsgrad T ≤ 0,1 auf, wobei T als Quotient L/Lo definiert ist (siehe oben). Im Rahmen der vorliegenden Erfindung lässt ein opakes Material einfallende elektromagnetische Strahlung daher zumindest im sichtbaren Wellenlängenbereich von ca. 380 nm bis ca. 780 nm im Wesentlichen nicht durch.

Ein "transluzentes", "durchscheinendes" oder "semitransparentes" Material, insbesondere eine "transluzente" Trägerflüssigkeit, weist im Rahmen der vorliegenden Erfindung zumindest im sichtbaren Wellenlängenbereich von ca. 380 nm bis ca. 780 nm einen Transmissionsgrad T größer 0,1 und kleiner 0,8 auf, d.h. 0,1 < T < 0,8.

Es ist hier noch anzumerken, dass die subjektive Wahrnehmung eines transparenten, transluzenten oder opaken Materials durch einen Betrachter zum Teil erheblich von der oben gegebenen exakten Definition für transparentes, transluzentes oder opakes Material abweichen kann. Bei Messreihen, die zur Festlegung der oben aufgeführten Transmissionsgrade für transparente, transluzente und opake Materialien geführt haben, wurde nämlich festgestellt, dass die subjektive Wahrnehmung eines transparenten, transluzenten oder opaken Materials sehr stark von der Beleuchtungssituation abhängt, also davon, ob das Material vom Betrachter in Reflexion, Transmission oder in einer Kombination aus Reflexion und Transmission betrachtet wird. So nimmt ein Betrachter unter Umständen z.B. ein Sicherheitselement auch dann noch als transparent wahr, wenn der Transmissionsgrad des Sicherheitselements mehr als z. B. 0,7 beträgt, d.h. weniger als 30 % des einfallenden Lichts reflektiert oder absorbiert werden. Gleiches gilt für eine Trägerflüssigkeit mit einem Transmissionsgrad von 0,7. Eine solche für den Betrachter transparent erscheinende Trägerflüssigkeit ist dann gegebenenfalls ein transluzentes Material im Sinne der oben gegebenen Definition (0,1 < T < 0,8).

Einen ähnlich großen Einfluss auf die subjektive Wahrnehmung eines Betrachters hat darüber hinaus die Lichtstreuung des betrachteten Materials, weil die Streuung unter anderem den Kontrast zwischen hellen und dunklen Bereichen des betrachteten Materials beeinflusst.

Unabhängig von dem möglichen Unterschied zwischen subjektiver Wahrnehmung eines Betrachters und obigen Definitionen transparenter, transluzenter oder opaker Materialien, sind alle im Rahmen dieser Anmeldung beschriebenen erfindungsgemäßen Varianten ausführbar, d. h. für den Fachmann problemlos nacharbeitbar.

Bezüglich der in den Mikrokapseln enthaltenen Trägerflüssigkeit sei an dieser Stelle angemerkt, dass in allen Varianten der Erfindung in dieser Trägerflüssigkeit zusätzliche Sicherheitsmerkmale enthalten sein können, die der Mikrokapsel und dem damit hergestellten Sicherheitselement eine zusätzliche Funktionalität, insbesondere einen weiter erhöhten Fälschungsschutz verleihen. Beispielsweise kann die Trägerflüssigkeit ein besonderes Farbmittel oder ein lumineszierendes, insbesondere fluoreszierendes Material aufweisen. Denkbar ist ferner ein Material, das mittels elektromagnetischer Strahlung, insbesondere Laserstrahlung, in einer physikalischen Größe, insbesondere in seiner Farbe, beeinflusst werden kann. Z.B. könnte bei einem solchen Material die Beaufschlagung mit elektromagnetischer Strahlung, insbesondere Laserstrahlung, zu einer Farbveränderung der in der Trägerflüssigkeit befindlichen Substanzen führen, so dass der Betrachter die Bereiche des Sicherheitselements, die mit elektromagnetischer Strahlung beaufschlagte Mikrokapseln enthalten, von den Bereichen ohne Beaufschlagung mit elektromagnetischer Strahlung unterscheiden kann, d.h. der Betrachter die mit Strahlung beaufschlagten bzw. nicht beaufschlagten Bereiche in einer unterschiedlichen Farbe wahrnimmt.

Es versteht sich, dass die zusätzlich in der Trägerflüssigkeit vorgesehenen Substanzen alternativ oder zusätzlich in der Kapselhülle der Mikrokapseln vorgesehen sein können. D.h. die Kapselhülle kann z.B. ein Farbmittel, ein lumineszierendes, insbesondere fluoreszierendes Material oder ein durch elektromagnetische Strahlung, insbesondere Laserstrahlung markierbares Material aufweisen. Auch durch die Vorsehung der vorstehend genannten Substanzen in der Kapselhülle kann eine weitere Funktionalität für die Mikrokapsel vorgesehen werden. Die zusätzliche Funktionalität der Kapselhülle bzw. der Trägerflüssigkeit (siehe oben) trägt in synergistischer Weise zur Erhöhung des Fälschungsschutzes der in der vorliegenden Anmeldung beschriebenen Erfindung bei.

Die Erfindung enthält ferner eine Sicherheitsanordnung zur Absicherung von Sicherheitspapieren, Wertdokumenten und dergleichen, mit einem Sicherheitselement der oben beschriebenen Art und mit einem Verifikationselement mit einem Magnetbereich. In dem Magnetbereich liegt vorteilhaft magnetisches Material in Form von Mustern, Linien, Zeichen oder einer Codierung vor. Das von dem magnetischen Material dargestellte Motiv kann offen sichtbar sein oder auch ohne Hilfsmittel verborgen sein, beispielsweise durch Überdeckung mit einer dunklen Druckschicht. Vorzugsweise ist der Magnetbereich im Wesentlichen senkrecht zur Ebene des Verifikationselements magnetisiert.

Die Erfindung umfasst weiter einen Datenträger, insbesondere ein Wertdokument, wie eine Banknote, einen Pass, eine Urkunde, eine Ausweiskarte oder dergleichen, der mit einem Sicherheitselement der beschriebenen Art oder mit einer Sicherheitsanordnung der beschriebenen Art ausgestattet ist. Enthält der Datenträger sowohl ein erfindungsgemäßes Sicherheitselement als auch ein zugehöriges Verifikationselement, so sind diese mit Vorteil geometrisch so auf dem Datenträger angeordnet, dass das Sicherheitselement durch Biegen oder Falten des Datenträgers über das Verifikationselement bringbar ist.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig.1: eine schematische Darstellung einer Banknote mit einem erfindungsgemäßen optisch variablen Sicherheitselement,
- Fig. 2: das Sicherheitselement der Fig.1 zusammen mit einer Verifikationseinrichtung, wobei in (a) Sicherheitselement und Verifikationseinrichtung räumlich getrennt sind, und in (b) das Sicherheitselement auf der Verifikationseinrichtung aufliegt,
- Fig. 3: einen Querschnitt durch ein Sicherheitselement nach einem Ausführungsbeispiel der Erfindung, in der linken Bildhälfte ohne und in der rechten Bildhälfte mit Verifikationseinrichtung,
- Fig. 4: eine Skizze zur Erläuterung des Prinzip der Fixierung der Pigmente in einer gewünschten Ausrichtung, wobei (a) den Zustand vor und (b) den Zustand nach der Laserbeschädigung zeigt,
- Fig. 5: eine Mikrokapsel mit einem großen Pigmentplättchen, in (a) vor und in (b) nach der Laserbeschädigung,
- Fig. 6: eine Mikrokapsel mit einem kleinen Pigmentplättchen, in (a) vor und in (b) nach der Laserbeschädigung,
- Fig. 7: schematisch die Möglichkeiten der Ausrichtung und Fixierung nicht-sphärischer Pigmente, wobei (a) den Zustand vor und (b) den Zustand nach der Laserbeschädigung zeigt,
- Fig. 8: in (a) eine Identifikationskarte mit einem erfindungsgemäßen Sicherheitselement, in (b) eine Kartenaufnahme mit einer Verifikationseinrichtung für die Identifikationskarte von (a) und in (c) die Kartenaufnahme mit eingelegter Identifikationskarte.

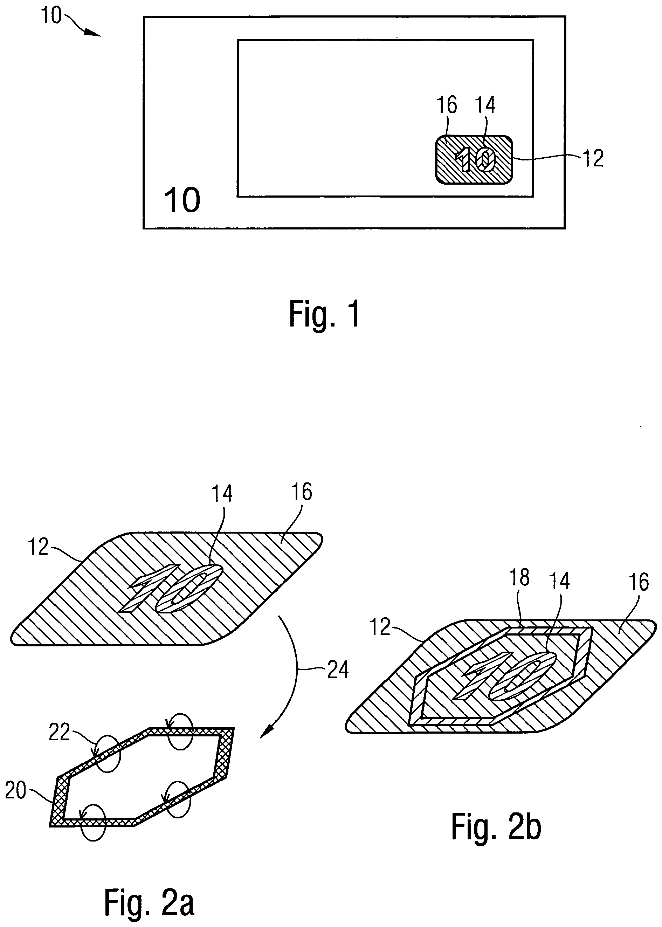

Die Erfindung wird nun am Beispiel von Sicherheitselementen für Banknoten und andere Wertdokumente erläutert. Fig.1 zeigt dazu eine schematische Darstellung einer Banknote 10 mit einem optisch variablen Sicherheitselement 12. Das Sicherheitselement 12 enthält einen stets sichtbaren Motivbereich 14, der die Form der Denomination "10" der Banknote bildet, und der sich durch eine besonders hohe optische Brillanz von dem Umgebungsbereich 16 abhebt.

Neben dem stets sichtbaren Motivbereich 14 enthält das Sicherheitselement 12 ein durch eine externe Verifikationseinrichtung 20 interaktiv auslösbares, reversibles Echtheitskennzeichen 18. Zur Erläuterung der Funktionsweise diese interaktiven Echtheitskennzeichens 18 zeigt Fig. 2(a) das Sicherheitselement 12 in großem Abstand von einer externen Verifikationseinrichtung 20, die im Ausführungsbeispiel durch einen starken Permanentmagneten in Form eines Hexagonrings gebildet ist. Die Oberseite des Hexagon-Magneten 20 bildet dabei einen magnetischen Nordpol und die Unterseite einen magnetischen Südpol, so dass die Magnetfeldlinien 22 des Hexagon-Magneten 20 im Wesentlichen senkrecht auf der Ebene des Magneten stehen.

Wird das Sicherheitselement 12 auf den Magneten 20 aufgelegt, wie durch das Bezugszeichen 24 in Fig. 2(a) angedeutet, so verändert sich das visuelle Erscheinungsbild des Sicherheitselements 12 in dem unmittelbar über dem Magneten 20 liegenden Teilbereich 18 des Umgebungsbereichs 16. Der visuelle Eindruck des Umgebungsbereichs 16 tritt im Teilbereich 18 in den Hintergrund und eine farbige oder informationsführende Untergrundschicht wird sichtbar, wie in Fig. 2(b) schematisch dargestellt. Im Motivbereich 14 tritt keine Änderung auf, auch wenn der Magnet 20 teilweise oder vollständig unter dem Motivbereich 14 liegt. Die Änderung im Teilbereich 18 ist dabei vollständig reversibel. Wird das Sicherheitselement 12 nämlich wieder von der Verifikationseinrichtung 20 entfernt, so stellt sich im Bereich 18 nach kurzer Zeit der Ausgangszustand der Fig. 2(a) wieder ein.

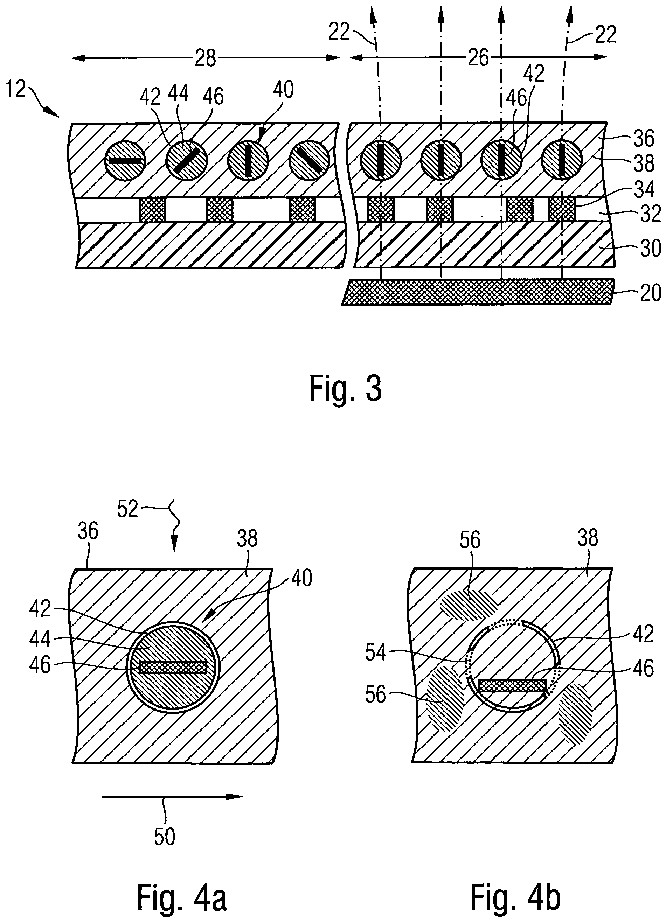

Der Aufbau eines erfindungsgemäßen Sicherheitselements 12 und das Zustandekommen der reversiblen Änderung des visuellen Erscheinungsbilds werden nun mit Bezug auf die Querschnittsdarstellung der Fig. 3 genauer erläutert. Dabei wird der Einfachheit halber der stets sichtbare Motivbereich 14 zunächst ausgeklammert und nur der Umgebungsbereich 16 dargestellt. Die sich im Motivbereich 14 ergebenen Unterschiede sind weiter unten mit Bezug auf die Figuren 4 bis 7 erläutert.

Zunächst zeigt die linke Bildhälfte von Fig. 3 das Sicherheitselement 12 ohne Verifikationseinrichtung 20 bzw. einen Bereich 28 abseits des Magneten 20, während die rechte Bildhälfte einen Bereich 26 des Sicherheitselements zeigt, der sich unmittelbar über dem Magneten 20 befindet.

Auf das Banknotenpapier 30 der Banknote 10 ist im Bereich des Sicherheitselements 12 eine Druckschicht 32 aufgebracht, die eine beliebige Information, wie etwa ein Muster 34, Zahlen und/oder Buchstaben, ein Portrait oder dergleichen darstellt. Die Druckschicht 32 kann aus einer oder mehreren Farben bestehen und wird typischerweise im Offset-, Letterset-, Flexo- oder Stichtiefdruck aufgebracht.

Über diese Druckschicht 32 ist zumindest in Teilen eine mikrokapselbasierte Farbschicht 36 aufgebracht, die in einem Bindemittel 38 eine Vielzahl von Mikrokapseln 40 enthält. Die Mikrokapseln weisen jeweils eine Kapselhülle 42, eine in der Kapselhülle eingeschlossene Trägerflüssigkeit 44 und als Kapselinhalt ein magnetisch ausrichtbares, nicht-sphärisches, insbesondere plättchenförmiges Pigment 46 auf. Die Pigmente 46 sind dabei in der Trägerflüssigkeit 44 der Mikrokapseln 40 im Wesentlichen frei drehbar und durch ein externes Magnetfeld, wie etwa das Feld 22 des Hexagon-Magneten 20 reversibel ausrichtbar.

Im Ausführungsbeispiel sind die Pigmente 46 aus reduzierend behandeltem Carbonyleisenpulver hergestellte plättchenförmige Eisenpigmente mit einem hohen Verhältnis von Plättchendurchmesser zu Plättchendicke von 20:1 oder mehr. Der (größte) Plättchendurchmesser liegt dabei vorzugsweise zwischen 2 µm und 150 µm, insbesondere zwischen 5 µm und 50 µm, und die Plättchendicke liegt vorzugsweise zwischen 40 nm und 1,5 µm, insbesondere zwischen 200 nm und 1,3 µm. Die Pigmente 46 können auch mehrschichtig ausgebildet sein und insbesondere eine magnetische Schicht und eine nichtmagnetische Schicht, insbesondere eine Interferenzschicht aufweisen. Ein mehrschichtiges Pigment kann beispielsweise durch ein Eisenpigment mit einer Siliziumdioxidschicht gebildet sein. Solche mehrschichtigen Pigmente können mit besonderem Vorteil magnetische Ausrichtbarkeit mit einem Farbwechsel bei Änderung des Betrachtungswinkels verbinden.

Die mikrokapselbasierte Farbschicht 36 wird bevorzugt im Sieb- oder Flexodruck aufgebracht, es kommt aber auch ein Auftrag über Düsen oder mit anderen dem Fachmann bekannten Druck- und Beschichtungsverfahren infrage.

Da die Pigmente 46 im Inneren der Kapselhülle 42 im Wesentlichen frei drehbar sind, weisen sie ohne externes Magnetfeld keine Vorzugsorientierung auf, sondern sind vielmehr im Wesentlichen zufällig und damit insgesamt isotrop ausgerichtet. Die gleichmäßige Verteilung der Ausrichtung der Pigmente 46 in alle Richtungen ist in der linken Bildhälfte der Fig. 3 schematisch dargestellt.

Im Bereich 26 unmittelbar über dem Magneten 20 sind die magnetisch ausrichtbaren Pigmente 46 aufgrund ihrer freien Drehbarkeit in der Kapselhülle 42 magnetisch ausgerichtet. Die plättchenförmigen Pigmente 46 orientieren sich dabei mit ihrer Plättchenausdehnung entlang der Magnetfeldlinien 22. Treten die Magnetfeldlinien 22 im Bereich 26 im Wesentlichen senkrecht durch die mikrokapselbasierte Farbschicht 36 hindurch, so richten sich die Pigmente 46 im Wesentlichen senkrecht zur Ebene der Farbschicht 36 aus, wie in der rechte Bildhälfte der Fig. 3 gezeigt.

Wegen ihrer plättchenförmigen Gestalt wirken die Pigmente 46 für den Betrachter wie die Lamellen einer Jalousie, die den Blick auf die darunterliegende Druckschicht 32, 34 freigeben oder ganz oder teilweise blockieren. In den Bereichen 28, in denen die Pigmente 46 im Wesentlichen isotrop in ihren Kapselhüllen 42 angeordnet sind (linke Bildhälfte der Fig. 3), schränken sie die Sicht auf die Druckschicht 32 stark ein, dass die mikrokapselbasierte Farbschicht 36 in diesem Bereich weitgehend opak erscheint.

Im Bereich 26, in dem die Pigmente 46 durch den Magneten 20 im Wesentlichen senkrecht zur Ebene der Farbschicht 34 ausgerichtet sind, geben diese dagegen wie die parallel gestellten Lamellen einer Jalousie den Blick auf die darunterliegende Druckschicht 30 und das Linienmuster 32 frei. Wegen des großen Verhältnisses von Plättchendurchmesser zu Plättchendicke ergibt sich ein hoher Kontrast zwischen deckenden Teilbereichen 28 und transluzenten Teilbereichen 26. Darüber hinaus erscheint das durch die Plättchenausrichtung in den Teilbereichen 26, 28 erzeugte Motiv für das menschliche Auge mit einem effektvollen, dreidimensional anmutenden Erscheinungsbild.

Wird das Sicherheitselement 12 wieder von dem Magneten 20 entfernt, so relaxieren die magnetisch ausgerichteten Pigmente 46 aufgrund ihrer Beweglichkeit innerhalb der Kapselhülle 42 nach einiger Zeit wieder in den im Wesentlichen isotropen Ausgangszustand der linken Bildhälfte der Fig. 3. Die Änderung des visuellen Erscheinungsbilds des Sicherheitselements 14 wird also interaktiv ausgelöst und ist vollständig reversibel. Die Geschwindigkeit, mit der die Pigmente 46 in ihren Ausgangszustand zurückkehren, kann beispielsweise durch die Viskosität der Trägerflüssigkeit 44 in weitem Rahmen nach Wunsch eingestellt werden.

Anstatt die Pigmente 46 durch den Magneten 20 senkrecht zur Ebene der Farbschicht 36 auszurichten, können sie selbstverständlich durch ein in der Ebene der Farbschicht 36 liegendes Magnetfeld auch parallel zur Ebene der Farbschicht 36 ausgerichtet werden. In parallelem Zustand erzeugen die Pigmente 46 einen optisch ansprechenden visuellen Eindruck hoher Brillanz, der von einem kooperativen Effekt einer Vielzahl nahezu exakt parallel zueinander ausgerichteter Pigmente 46 herrührt.

Erfindungsgemäß werden in der mikrokapselbasierten Farbschicht 36 neben den reversibel veränderbaren Bereichen auch ein oder mehrere Motivbereiche 14 mit festgelegter Orientierung des Pigmente 46 geschaffen. Sind die Pigmente 46 in einem Motivbereich 14 beispielsweise alle parallel zur Ebene der Farbschicht 36 ausgerichtet und in dieser Ausrichtung fixiert, so bildet der Motivbereich 14 einen Teilbereich besonders hoher Brillanz, der an der oben beschriebenen reversiblen Änderung des visuellen Erscheinungsbilds des Sicherheitselements 12 nicht teilnimmt.

In anderen Gestaltungen können die Pigmente 46 eines Motivbereichs beispielsweise alle senkrecht zur Ebene der Farbschicht 36 ausgerichtet und in dieser Ausrichtung fixiert sein, so dass ein solcher Motivbereich stets den Blick auf die Farbe oder Information der Druckschicht 30, 32 freigibt, ohne an der oben beschriebenen reversiblen Änderung des visuellen Erscheinungsbilds des Sicherheitselements 12 teilzunehmen.

Das Prinzip der Fixierung der Pigmente 46 in einer gewünschten Ausrichtung wird nun mit Bezug auf Fig. 4 erläutert, wobei der Einfachheit halber jeweils nur eine einzige Mikrokapsel 40 in dem Bindemittel 38 dargestellt ist. Zunächst werden durch Anlegen eines geeigneten externen Magnetfelds 50 die in der Trägerflüssigkeit 44 frei drehbaren Pigmente 46 ausgerichtet, beispielsweise parallel zur Ebene der Farbschicht 36, wie in Fig. 4(a) gezeigt. Es versteht sich, dass durch das externe Magnetfeld 50 anstelle einer Orientierung parallel zur Ebene der Farbschicht auch eine andere Ausrichtung, etwa senkrecht zur Ebene der Farbschicht, vorgegeben werden kann.

Die Ausrichtung kann auch räumlich variieren und ein Muster oder ein Motiv bilden. Beispielsweise kann durch das sphärische Feld eines unterhalb der Farbschicht 36 angeordneten Kugelmagneten ein kreisförmiges Ausrichtungsmuster erzeugt werden, bei dem die Pigmente 46 im Kreismittelpunkt senkrecht zur Farbschichtebene und an den Kreisrändern im Wesentlichen parallel zur Farbschichtebene ausgerichtet sind.

Die Mikrokapseln 40 mit den ausgerichteten Pigmenten 46 werden nun im Motivbereich mit der gepulsten Laserstrahlung 52 eines Nd:YAG-Lasers einer Wellenlänge von 1064 nm beaufschlagt. Durch die Wechselwirkung der Laserstrahlung mit den Mikrokapseln wird die Kapselhülle 42 beschädigt, so dass die Trägerflüssigkeit 44 aus den Kapseln austritt, wie in Fig. 4(b) dargestellt.

Die Beschädigung der Kapselhülle kann beispielsweise darin bestehen, dass die Kapselhülle in Teilbereichen 54 durch die Laserenergie zerstört wird, oder auch in einem Aufplatzen der gesamten Kapselhülle. Mögliche Mechanismen für die Beschädigung der Kapselhülle durch die Wechselwirkung mit der Laserstrahlung sind weiter unten genauer beschrieben. Unabhängig vom genauen Mechanismus ist für Erfindung allerdings lediglich wesentlich, dass die Beschädigung der Kapselhülle 42 zu einem Austreten der Trägerflüssigkeit 44 aus den Mikrokapseln 40 führt. Das Austreten der Trägerflüssigkeit kann durch die Kapillarwirkung von Kanälen bzw. eines polymeren Netzwerks im gehärteten Bindemittel 38 und gegebenenfalls durch die Saugfähigkeit der Untergrundschichten oder des Substrats begünstigt werden. Die ausgetretene Trägerflüssigkeit 56 ist in Fig. 4(b) schematisch eingezeichnet.

Durch das Austreten der Trägerflüssigkeit 44 verlieren die Pigmente 46 ihre freie Drehbarkeit in den Mikrokapseln und verbleiben unbeweglich in den nunmehr beschädigten Kapselhüllen 42. Bei plättchenförmigen Pigmenten haben die Pigmentplättchen bevorzugt im Mittel einen Plättchendurchmesser (längste Seite) von weniger als 75 % der Kapseldurchmessers, besonders bevorzugt liegt der Plättchendurchmesser im Mittel zwischen 50 % und 75 % des Kapseldurchmessers. Dies ermöglicht beim Austreten der Trägerflüssigkeit 44 ein Absinken der Pigmentplättchen dergestalt, dass sie weitgehend parallel zur Ebene der Farbschicht 36 zu liegen kommen, so dass der oben angesprochene kollektive optische Effekt paralleler Pigmentplättchen noch leichter erreicht wird.

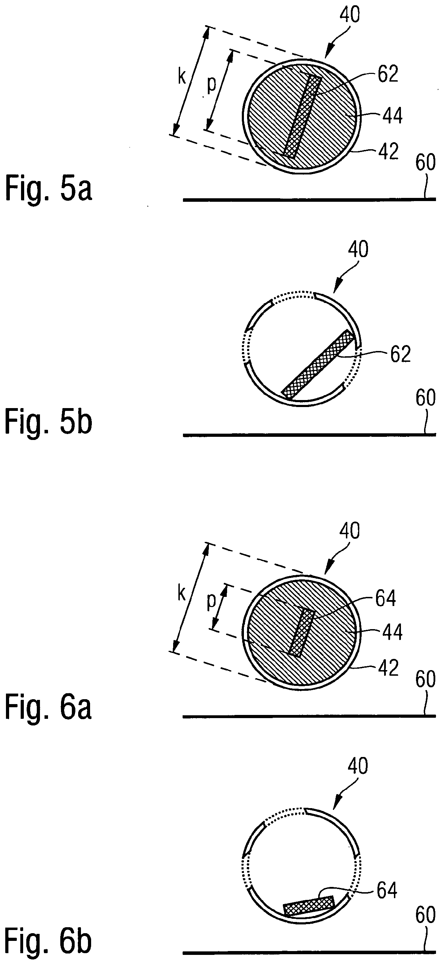

Zur Illustration dieses Effekts zeigt Fig. 5(a) eine Mikrokapsel 40 mit einem großen Pigmentplättchen 62 mit einem Plättchendurchmesser p von 85% des Kapseldurchmessers k. Nach der Beschädigung der Kapselhülle 42 und dem Austreten der Trägerflüssigkeit 44 sinkt das große Pigmentplättchen 62 etwas ab, verändert seine Ausrichtung relativ zur Farbschichtebene 60 aufgrund seiner Größe dabei aber nur wenig, wie in Fig. 5(b) dargestellt. Im Gegensatz dazu enthält die Mikrokapsel 40 der Fig. 6(a) ein kleines Pigmentplättchen 64, dessen Plättchendurchmesser p nur 50% des Kapseldurchmessers k beträgt. Nach der Beschädigung der Kapselhülle 42 und dem Austreten der Trägerflüssigkeit 44 sinkt das kleine Pigmentplättchen 64 ab und kippt dabei auch ohne externes Magnetfeld in eine annähernd parallel zur Farbschichtebene 60 liegende Orientierung, wie in Fig. 6(b) dargestellt.

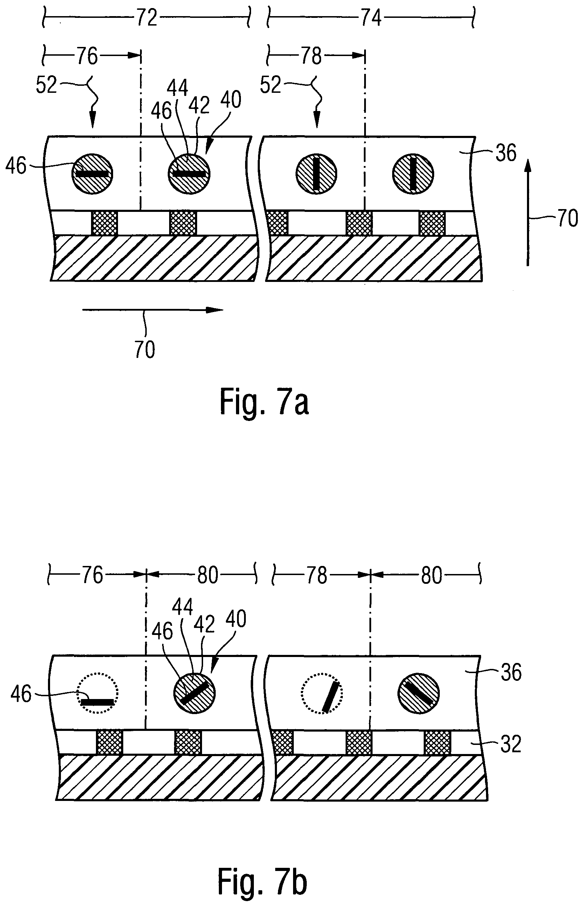

Fig. 7 fasst die Möglichkeiten der Ausrichtung und Fixierung nicht-sphärischer Pigmente 46 schematisch zusammen. Dabei symbolisiert in der Darstellung der Fig. 7(a) jeweils eine Mikrokapsel 40 einen ganzen Teilbereich der Farbschicht 36 mit einer Vielzahl an Mikrokapseln. Durch ein externes Magnetfeld 70 können die Pigmente 46 der Mikrokapseln nach Wunsch ausgerichtet werden, beispielsweise in einem Teilbereich 72 parallel zur Ebene der Farbschicht 36 (linke Bildhälfte in Fig. 7(a)) und in einem Teilbereich 74 senkrecht zur Ebene der Farbschicht 36 (rechte Bildhälfte in Fig. 7(a)).

Dann werden die Mikrokapseln 40 in Motivbereichen 76, 78 mit Laserstrahlung 52 beaufschlagt und dadurch die Kapselhüllen 42 der Mikrokapseln 40 beschädigt, so dass die Trägerflüssigkeit 44 austritt und die Pigmente 46 unbeweglich in den beschädigten Kapselhüllen zurückbleiben, wie in Fig. 7(b) gezeigt. In den nicht beaufschlagten Umgebungsbereichen 80 behalten die Pigmente ihre freie Drehbarkeit bei. Sie relaxieren nach dem Entfernen des äußeren Magnetfelds 70 in eine zufällige Orientierung und können auch später jederzeit durch ein externes Magnetfeld ausgerichtet werden.

Im ersten Motivbereich 76 sind die Pigmente 46 im Ergebnis in einer Ausrichtung parallel zur Ebene der Farbschicht 36 fixiert und zeigen dort unabhängig von einem später angelegten externen Magnetfeld stets einen ausgeprägten optischen Effekt hoher Brillanz. Im zweiten Motivbereich 78 sind die Pigmente 46 in einer Ausrichtung im Wesentlichen senkrecht zur Ebene der Farbschicht 36 fixiert und geben dort unabhängig von einem später angelegten externen Magnetfeld stets den Blick auf die Druckschicht 32 frei. In den Umgebungsbereichen 80, in denen die Pigmente 46 nicht fixiert wurden, können diese auch nach der Laserbeaufschlagung durch ein externes Magnetfeld reversibel ausgerichtet werden, wie in Zusammenhang mit Fig. 3 bereits beschrieben.

Wie oben angegeben, wird durch die Wechselwirkung der Laserstrahlung 52 mit den Mikrokapseln 40 die Kapselhülle 42 beschädigt, so dass die Trägerflüssigkeit 44 austreten kann. Ohne an eine bestimmte Erklärung gebunden sein zu wollen, sind es nach gegenwärtigem Verständnis insbesondere drei Wechselwirkungsmechanismen, die zu einer laserinduzierten Beschädigung der Kapselhülle führen.

Ein erster Wechselwirkungsmechanismus setzt an der Hülle 42 der Kapseln selbst an. Die Hülle besteht in der Regel aus Polymeren, wie etwa Melaminharz, gehärteter Gelatine oder Acrylat. Je nach der Art des Hüllenmaterials und der Kapselherstellung können die Hüllen eine geringe inhärente Absorptivität aufweisen, die vor allem bei hohen Leistungsdichten, wie sie mit heutigen gepulsten und fokussierten Lasersystemen erreicht werden, ausreichen kann, um die Kapselhülle gezielt zu beschädigen.

Um eine effizientere Wechselwirkung zwischen dem Laserlicht und der Kapselhülle zu ermöglichen, ist es allerdings bevorzugt, bei der Kapselherstellung einer geringe Menge eines Infrarotabsorbers in die Hülle einzubauen oder die Hülle mit einem solchen Infrarotabsorber zu belegen oder zu beschichten. Hier können sowohl breitbandig absorbierende Stoffe, wie etwa Ruß, aber auch spezifisch auf den bei der Beaufschlagung verwendeten Laser ausgelegte Absorber eingesetzt werden, welche nur in einem engen Spektralbereich um die Laserwellenlänge herum absorbieren.

Vorteile breitbandiger Absorber sind ihre Wirtschaftlichkeit, die gute Kompatibilität mit den meisten Verkapselungsprozessen und die hohen Absorptionskoeffizienten. Allerdings absorbieren breitbandige Absorber auch im sichtbaren Spektralbereich, so dass ihre Konzentration nicht zu hoch gewählt werden kann, um den optischen Gesamteindruck nicht zu beeinträchtigen. In der Praxis hat sich allerdings herausgestellt, dass bereits Konzentrationen von 0,01 Gew.-% bis 1 Gew.-% eines breitbandigen Absorbers in der Kapselhülle ausreichend sind, um eine gute Wechselwirkungsstärke zu erhalten. Bei diesen Konzentrationen tritt noch keine Beeinträchtigung des visuellen Eindrucks auf.

Bei einem weiteren Wechselwirkungsmechanismus interagiert die Laserstrahlung 52 mit der Trägerflüssigkeit 44 der Kapseln. Da die Wegstrecke der Laserstrahlung durch das Kapselinnere vergleichsweise lang ist, genügt hier bereits eine geringe Absorption um den gewünschten Effekt zu erreichen. Durch die Absorption der Laserenergie in der Trägerflüssigkeit wird diese erhitzt und es können sich gasförmige Produkte bilden. Nach gegenwärtigem Verständnis führt die damit verbundene Expansion der Trägerflüssigkeit zu einem Aufreißen oder Zerplatzen der Kapselhülle 42. Auch bei dieser Variante kann die Absorption der Trägerflüssigkeit durch den Zusatz weiterer Stoffe erhöht werden um unter effizienterer Nutzung der Laserenergie das gewünschte Ergebnis zu erreichen.

Schließlich können bei einem dritten Wechselwirkungsmechanismus auch die verkapselten Pigmente 46 durch die Absorption der Laserstrahlung zu einer Beschädigung der Kapselhülle führen. Nach gegenwärtigem Verständnis führt die Absorption der Laserenergie durch die Pigmente zu einer Erwärmung der umgebenden Trägerflüssigkeit und durch deren Ausdehnung letztlich zu einer Beschädigung der Kapselhülle. Die Beschädigung der Hülle kann allerdings auch auf eine teilweise oder vollständige Ablation der Pigmente durch die Laserstrahlung zurückgehen.

Es versteht sich, dass auch zwei oder alle drei der genannten Wechselwirkungsmechanismen gleichzeitig zum Tragen kommen können. Besonders bevorzugt sind derzeit Gestaltungen, bei denen die Kapselhülle und/oder die Trägerflüssigkeit im Bereich der Laserwellenlänge absorbierend sind. Falls notwendig, wird die Absorptivität durch Zusatz von Absorbern sichergestellt, die breitbandig oder nur im Bereich der Laserwellenlänge absorbieren. Solche Absorber sind mit besonderem Vorteil in oder auf der Kapselhülle vorgesehen.

Um einen ungehinderten Zugang der Laserstrahlung zu den Mikrokapseln 40 zu ermöglichten, weist das Bindemittel 38 der Farbschicht 36 vorteilhaft eine hohe Transparenz auf. Die Mikrokapseln können auch dicht an der Oberfläche der Farbschicht 36 angeordnet sein oder sogar aus dieser herausragen. Die Mikrokapseln können auch auf einem teilweise transparenten Substrat, wie etwa einer transparenten Folie, aufgebracht sein.

Generell kann es sich bei dem erfindungsgemäßen Substrat insbesondere um Papier, Kunststoff oder einen Papier-Kunststoffverbund handeln.

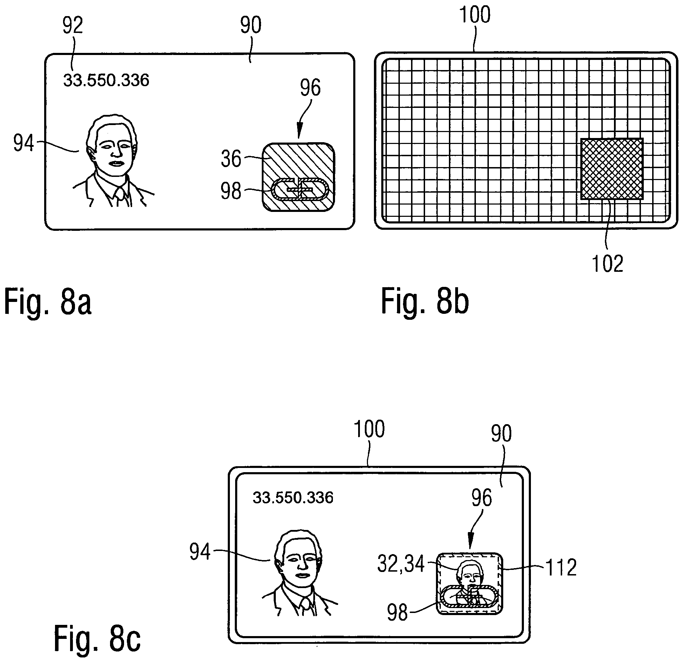

Die Erfindung kann auch bei Karten vorteilhaft eingesetzt werden, wie anhand des Ausführungsbeispiels der Fig. 8 illustriert. Fig. 8(a) zeigt eine Aufsicht auf eine Identifikationskarte 90, wie etwa eine Ausweiskarte, Bankkarte, Kreditkarte oder einen Führerschein. Die Identifikationskarte 90 enthält typischerweise eine oder mehrere offene Kennzeichnungen, wie etwa eine Seriennummer 92 oder ein Portrait 94 des Karteninhabers.

Zusätzlich enthält die Identifikationskarte 90 ein erfindungsgemäßes Sicherheitselement 96, das im Ausführungsbeispiel durch eine Druckschicht 32 mit einer zweiten verkleinerten Portraitdarstellung 34 des Karteninhabers und eine auf die Druckschicht 32 aufgebrachte mikrokapselbasierte Farbschicht 36 der oben beschriebenen Art gebildet ist. Wegen der im Wesentlichen isotropen Ausrichtung der verkapselten Pigmente 46 ist die mikrokapselbasierte Farbschicht 36 normalerweise opak, so dass die zweite Portraitdarstellung 34 für einen Betrachter verborgen ist.

In einem Motivbereich 98, der im Ausführungsbeispiel in Form eines Logos gestaltet ist, sind die Pigmente 46 in einer Ausrichtung parallel zum Kartenkörper fixiert, so dass sich dieser Motivbereich 98 durch seine besonders hohe Brillanz von dem Hintergrundbereich abhebt, wie in Fig. 8(a) gezeigt.

Zur Authentifizierung wird die Identifikationskarte 90 in eine zugehörige Kartenaufnahme 100 gelegt, die, wie in Fig. 8(b) gezeigt, als Verifikationseinrichtung einen auf die Lage, Größe und Form des Sicherheitselements 96 abgestimmten Permanentmagneten 102 enthält. Bei einer echten Identifikationskarte 90 werden die nicht fixierten, noch magnetisch ausrichtbaren Pigmente 46 durch die Magnetisierung des Magneten 102 senkrecht zur Ebene des Sicherheitselements 96 ausgerichtet und geben dadurch den Blick auf die zweite Portraitdarstellung 34 frei, wie in Fig. 8(c) dargestellt. Im Motivbereich 98 sind die Pigmente 46 in ihrer Ausrichtung fixiert, so dass dieser Bereich am reversiblen Wechsel des Erscheinungsbilds nicht teilnimmt. Das Erscheinen der zweiten Portraitdarstellung 34 in Überlagerung mit dem Logo 98 und die Übereinstimmung mit dem ersten Portrait 94 kann somit zur Echtheitsprüfung der Karte 90 und als Berechtigungsnachweis des Karteninhabers eingesetzt werden.

### Bezugszeichenliste

- 10: Banknote
- 12: Sicherheitselement
- 14: Motivbereich
- 16: Umgebungsbereich
- 18: reversibles Echtheitskennzeichen
- 20: Verifikationseinrichtung
- 22: Magnetfeldlinien
- 24: Auflegen
- 26, 28: Bereiche
- 30: Banknotenpapier
- 32: Druckschicht
- 34: Muster
- 36: mikrokapselbasierte Farbschicht
- 38: Bindemittel
- 40: Mikrokapseln
- 42: Kapselhülle
- 44: Trägerflüssigkeit
- 46: Pigment
- 50: externes Magnetfeld
- 52: Laserstrahlung
- 54: zerstörte Teilbereiche
- 56: ausgetretene Trägerflüssigkeit
- 60: Farbschichtebene
- 62: großes Pigmentplättchen
- 64: kleines Pigmentplättchen
- 70: externes Magnetfeld
- 72,74: Teilbereiche
- 76,78: Motivbereiche
- 80: Umgebungsbereiche
- 90: Identifikationskarte
- 92: Seriennummer
- 94: Portrait
- 96: Sicherheitselement
- 98: Motivbereich
- 100: Kartenaufnahme
- 102: Permanentmagnet

## Patentansprüche

1. Verfahren zur Herstellung eines optisch variablen Sicherheitselements mit einer mikrokapselbasierten Farbschicht (36) mit einem Motivbereich (14) in Form von Mustern, Zeichen oder einer Codierung, bei dem
D) eine Druckfarbe bereitgestellt wird, die in einem Bindemittel (38) eine Vielzahl von Mikrokapseln (40) enthält, die jeweils eine Kapselhülle (42), eine in der Kapselhülle (42) eingeschlossene Trägerflüssigkeit (44) und ein magnetisch ausrichtbares, nicht-sphärisches Pigment (46) aufweisen, welches in der Mikrokapsel im Wesentlichen frei drehbar und durch ein externes Magnetfeld reversibel ausrichtbar ist,
A) die Druckfarbe auf einen Untergrund aufbracht wird um eine mikrokapselbasierte Farbschicht (36) zu bilden, und
M) in einem den Motivbereich (14) enthaltenden Teilbereich der Farbschicht (36) ein externes Magnetfeld angelegt wird, um dort die drehbaren Pigmente (46) in den Mikrokapseln (40) auszurichten,
**dadurch gekennzeichnet, dass**
B) in dem Motivbereich (14) die Kapselhüllen (42) der Mikrokapseln (40) beschädigt werden, so dass die Trägerflüssigkeit (44) aus den Mikrokapseln (40) austritt und die Pigmente (46) unbeweglich in den beschädigten Kapselhüllen (42) zurückbleiben.

2. Verfahren nach Anspruch 1, **dadurch gekennzeichnet, dass** die Kapselhüllen (42) im Schritt B) durch Einwirkung von Laserstrahlung, insbesondere durch gepulste Laserstrahlung im nahen Infrarot beschädigt werden.

3. Verfahren nach Anspruch 1 oder 2, **dadurch gekennzeichnet, dass** die Kapselhüllen (42) der Mikrokapseln (40) beschädigt werden, während das externe Magnetfeld angelegt ist.

4. Verfahren nach wenigstens einem der Ansprüche 1 bis 3, **dadurch gekennzeichnet, dass** die drehbaren Pigmente (46) im Schritt M) zumindest in einem Teil des Motivbereichs (14) parallel zur Ebene der Farbschicht (36) ausgerichtet werden und im Schritt B) in dieser Ausrichtung durch Beschädigung der Kapselhüllen (42) fixiert werden.

5. Verfahren nach wenigstens einem der Ansprüche 1 bis 4, **dadurch gekennzeichnet, dass** die drehbaren Pigmente (46) im Schritt M) zumindest in einem Teil des Motivbereichs senkrecht zur Ebene der Farbschicht (36) ausgerichtet werden und im Schritt B) durch Beschädigung der Kapselhüllen (42) in im Wesentlichen senkrechter Ausrichtung fixiert werden.

6. Verfahren nach wenigstens einem der Ansprüche 2 bis 5, **dadurch gekennzeichnet, dass** im Schritt D) eine Druckfarbe bereitgestellt wird, bei der das Material der Kapselhüllen (42) und/oder die Trägerflüssigkeit (44) einen Absorber für die zur Beschädigung der Kapselhüllen (42) eingesetzte Laserstrahlung enthält.

7. Verfahren nach wenigstens einem der Ansprüche 2 bis 5, **dadurch gekennzeichnet, dass** im Schritt D) eine Druckfarbe bereitgestellt wird, deren Bindemittel (38) bei der Wellenlänge der zur Beschädigung der Kapselhüllen (42) eingesetzten Laserstrahlung transparent ist.

8. Verfahren nach wenigstens einem der Ansprüche 1 bis 7, **dadurch gekennzeichnet, dass** im Schritt A) zunächst eine Untergrundschicht auf ein Substrat aufgebracht wird, vorzugsweise in Form einer Information, insbesondere einem Muster, Zahlen und/ oder Buchstaben, einem Portrait oder dergleichen, und dass die Druckfarbe auf die Untergrundschicht aufgebracht wird.

9. Verfahren nach wenigstens einem der Ansprüche 1 bis 8, **dadurch gekennzeichnet, dass** die Druckfarbe im Schritt A) im Sieb- oder Flexodruck aufgebracht wird.

10. Optisch variables Sicherheitselement (12) zur Absicherung von Wertgegenständen mit einer mikrokapselbasierten Farbschicht (36), die in einem Bindemittel (38) eine Vielzahl von Mikrokapseln (40) enthält, die jeweils eine Kapselhülle (42), eine in der Kapselhülle (42) eingeschlossene Trägerflüssigkeit (44) und ein magnetisch ausrichtbares, nicht-sphärisches Pigment (46) aufweisen, welches in der Mikrokapsel im Wesentlichen frei drehbar und durch ein externes Magnetfeld reversibel ausrichtbar ist, wobei die mikrokapselbasierte Farbschicht (36) einen Motivbereich (14) mit unterschiedlichem visuellem Eindruck enthält, der in Form von Mustern, Zeichen oder einer Codierung ausgebildet ist,
**dadurch gekennzeichnet, dass**
im Motivbereich (14) die Kapselhüllen (42) der Mikrokapseln (40) beschädigt sind, die Trägerflüssigkeit (44) aus den Kapselhüllen (42) ausgetreten ist und die Pigmente (46) unbeweglich in den beschädigten Kapselhüllen (42) vorliegen.

11. Sicherheitselement nach Anspruch 10, **dadurch gekennzeichnet, dass** die Pigmente (46) plättchenförmig ausgebildet sind, wobei das Verhältnis des größten zum kleinsten Durchmesser (Durchmesser-zu-Dickenverhältnis) der plättchenförmigen Pigmente (46) mehr als 4:1, bevorzugt mehr als 10:1 beträgt und besonders bevorzugt zwischen 20:1 und 200:1 liegt.

12. Sicherheitselement nach Anspruch 10 oder 11, **dadurch gekennzeichnet, dass** die mikrokapselbasierte Farbschicht (36) auf einer informationsführenden Untergrundschicht, insbesondere einer Siebdruck-, Flexodruck- oder Stichtiefdruckschicht aufgebracht ist und/ oder dass die mikrokapselbasierte Farbschicht (36) mit einer thermochromen oder magnetischen Untergrundschicht kombiniert ist.

13. Sicherheitselement nach wenigstens einem der Ansprüche 10 bis 12, **dadurch gekennzeichnet, dass** die unbeweglichen Pigmente (46) in dem Motivbereich (14) zumindest teilweise parallel zur Ebene der Farbschicht (36) ausgerichtet sind.

14. Sicherheitsanordnung zur Absicherung von Sicherheitspapieren, Wertdokumenten, Datenträgern und dergleichen mit einem nach einem der Ansprüche 1 bis 9 herstellbaren Sicherheitselement oder einem Sicherheitselement nach einem der Ansprüche 10 bis 13 und mit einem Verifikationselement mit einem Magnetbereich, wobei in dem Magnetbereich bevorzugt magnetisches Material in Form von Mustern, Linien, Zeichen oder einer Codierung vorliegt und/ oder der Magnetbereich bevorzugt im Wesentlichen senkrecht zur Ebene des Verifikationselements magnetisiert ist.

15. Datenträger mit einem nach einem der Ansprüche 1 bis 9 herstellbaren Sicherheitselement, einem Sicherheitselement nach einem der Ansprüche 10 bis 13 oder mit einer Sicherheitsanordnung nach Anspruch 14, wobei im letzteren Fall das Sicherheitselement und das Verifikationselement der Sicherheitsanordnung bevorzugt geometrisch so auf dem Datenträger angeordnet sind, dass das Sicherheitselement durch Biegen oder Falten des Datenträgers über das Verifikationselement bringbar ist.

## Claims

1. A method for manufacturing an optically variable security element with a microcapsule-based ink layer (36) with a motif region (14) in the form of patterns, characters or a coding, in which
D) a printing ink is made available which in a binding agent (38) contains a multiplicity of microcapsules (40) each of which having a capsule shell (42), a carrier liquid (44) enclosed in the capsule shell (42) and a magnetically orientable, non-spherical pigment (46) which is substantially freely rotatable and can be reversibly oriented in the microcapsule by an external magnetic field,
A) the printing ink is applied to a background to form a microcapsule-based ink layer (36), and
M) applying an external magnetic field in a partial region of the ink layer (36) containing the motive region (14), in order to orient the rotatable pigments (46) in the microcapsules there,
**characterized in that**
B) in the motif region (14) the capsule shells (42) of the microcapsules (40) are damaged so that the carrier liquid (44) exits from the microcapsules (40) and the pigments (46) remain immobile in the damaged capsule shells (42).

2. The method according to claim 1, **characterized in that** in step B) the capsule shells are damaged by the action of laser radiation, in particular by pulsed laser radiation in the near infrared.

3. The method according to claim 1 or 2, **characterized in that** the capsule shells (42) of the microcapsules (40) are damaged while the external magnetic field is applied.

4. The method according to at least one of the claims 1 to 3, **characterized in that** in step M) the rotatable pigments (46) are oriented parallel to the plane of the ink layer (36) at least in a portion of the motif region (14), and in step B) are fixed in this orientation by damaging the capsule shells (42).

5. The method according to at least one of the claims 1 to 4, **characterized in that** in step M) the rotatable pigments (46) are oriented perpendicularly to the plane of the ink layer (36) in at least a portion of the motif region, and in step b) are fixed in substantially perpendicular orientation by damaging the capsule shells (42).

6. The method according to at least one of the claims 2 to 5, **characterized in that** in step D) a printing ink is made available in which the material of the capsule shells (42) and/or the carrier liquid (44) contains an absorber for the laser radiation used for damaging the capsule shells (42).

7. The method according to at least one of the claims 2 to 5, **characterized in that** in step D) a printing ink is made available the binding agent (38) of which is transparent at the wavelength of the laser radiation used for damaging the capsule shells (42).

8. The method according to at least one of the claims 1 to 7, **characterized in that** in step A) first a background layer is applied to a substrate, preferably in the form of an information item, in particular a pattern, numbers and/or letters, a portrait or the like, and that the printing ink is applied to the background layer.

9. The method according to at least one of the claims 1 to 8, **characterized in that** in step A) the ink layer is applied by screen printing or flexographic printing.

10. An optically variable security element (12) for securing value objects, with a microcapsule-based ink layer (38) which in a binding agent (38) contains a multiplicity of microcapsules (40), each of which having a capsule shell (42), a carrier liquid (44) enclosed in the capsule shell (42) and a magnetically orientable, non-spherical pigment (46) which is substantially freely rotatable and can be reversibly oriented in the microcapsule by an external magnetic field, wherein the microcapsule-based ink layer (36) contains a motif region (14) with a different visual impression that is formed in the form of patterns, characters or a coding,
**characterized in that**
in the motif region (14) the capsule shells (42) of the microcapsules (40) are damaged, the carrier liquid (42) has exited from the capsule shells (42) and the pigments (46) are present in immobile form in the damaged capsule shells (42)

11. The security element according to claim 10, **characterized in that** the pigments (46) are formed to be platelet-shaped, wherein the ratio of the largest to the smallest diameter (diameter-to-thickness ratio) of the platelet-shaped pigments (46) is more than 4:1, preferably more than 10:1, and particularly preferably between 20:1 and 200:1.

12. The security element according to claim 10 or 11, **characterized in that** the microcapsule-based ink layer (36) is applied to an information-bearing background layer, in particular to a screen printing, flexographic printing or intaglio printing layer, and/or that the microcapsule-based ink layer (36) is combined with a thermochromic or magnetic background layer.

13. The security element according to at least one of the claims 10 to 12, **characterized in that** the immobile pigments (46) in the motif region (14) are oriented at least partially parallel to the plane of the ink layer (36).

14. A security arrangement for securing security papers, value documents, data carriers, and the like, with a security element manufacturable according to any of the claims 1 to 9 or a security element according to any of the claims 10 to 13 and with a verification element with a magnetic region, wherein in the magnetic region preferably magnetic material is present in the form of patterns, lines, characters or a coding and/or the magnetic region is magnetized preferably substantially perpendicularly to the plane of the verification element.

15. A data carrier with a security element manufacturable according to any of the claims 1 to 9, a security element according to any of the claims 10 to 13 or with a security arrangement according to claim 14, wherein in the latter case the security element and the verification element of the security arrangement are preferably arranged geometrically on the data carrier such that the security element can be brought over the verification element by bending or folding the data carrier.

## Revendications

1. Procédé de fabrication d'un élément de sécurité optiquement variable comportant une couche d'encre (36) à base de microcapsules ayant une zone de motif (14) sous forme de motifs, de caractères ou d'une codification, dans lequel
D) une encre d'impression est mise à disposition, laquelle contient, dans un liant (38), une pluralité de microcapsules (40) qui comportent respectivement une enveloppe de capsule (42), un liquide porteur (44) enfermé dans l'enveloppe de capsule (42), et un pigment (46) non sphérique pouvant être orienté magnétiquement, pouvant tourner sensiblement librement dans la microcapsule et pouvant être orienté de manière réversible par un champ magnétique externe,
A) l'encre d'impression est appliquée sur un support afin de constituer une couche d'encre (36) à base de microcapsules, et
M) dans une zone partielle de la couche d'encre (36) contenant la zone de motif (14), un champ magnétique externe est appliqué afin d'y orienter les pigments (46) rotatifs dans les microcapsules (40),
**caractérisé en ce que**
B) dans la zone de motif (14), les enveloppes de capsule (42) des microcapsules (40) sont endommagées, de telle façon que le liquide porteur (44) sort des microcapsules (40) et que les pigments (46) demeurent immobiles dans les enveloppes de capsule (42) endommagées.

2. Procédé selon la revendication 1, **caractérisé en ce que** les enveloppes de capsule (42) sont, à l'étape B), endommagées par l'action de rayonnement laser, en particulier par rayonnement laser pulsé dans l'infrarouge proche.

3. Procédé selon la revendication 1 ou 2, **caractérisé en ce que** les enveloppes de capsule (42) des microcapsules (40) sont endommagées pendant que le champ magnétique externe est appliqué.

4. Procédé selon au moins une des revendications de 1 à 3, **caractérisé en ce que** les pigments (46) rotatifs sont, à l'étape M), orientés parallèlement au plan de la couche d'encre (36) au moins dans une partie de la zone de motif (14), et sont, à l'étape B), fixés dans cette orientation par endommagement des enveloppes de capsule (42).

5. Procédé selon au moins une des revendications de 1 à 4, **caractérisé en ce que** les pigments (46) rotatifs sont, à l'étape M), orientés perpendiculairement au plan de la couche d'encre (36) au moins dans une partie de la zone de motif, et sont, à l'étape B), fixés par endommagement des enveloppes de capsule (42) dans une orientation sensiblement perpendiculaire.

6. Procédé selon au moins une des revendications de 2 à 5, **caractérisé en ce que,** à l'étape D), une encre d'impression est mise à disposition, dans laquelle le matériau des enveloppes de capsule (42) et/ou le liquide porteur (44) contient un absorbeur pour le rayonnement laser mis en oeuvre pour l'endommagement des enveloppes de capsule (42).

7. Procédé selon au moins une des revendications de 2 à 5, **caractérisé en ce que,** à l'étape D), une encre d'impression est mise à disposition, dont le liant (38) est transparent à la longueur d'ondes mise en oeuvre pour l'endommagement des enveloppes de capsule (42).

8. Procédé selon au moins une des revendications de 1 à 7, **caractérisé en ce que,** à l'étape A), tout d'abord une couche support est appliquée sur un substrat, de préférence sous forme d'une information, en particulier d'un motif, de chiffres et/ou de lettres, d'un portrait un figuration similaire, et **en ce que** l'encre d'impression est appliquée sur la couche support.

9. Procédé selon au moins une des revendications de 1 à 8, **caractérisé en ce que** l'encre d'impression est appliquée à l'étape A) par sérigraphie ou par flexographie.

10. Élément de sécurité (12) optiquement variable destiné à la protection d'objets de valeur, comportant une couche d'encre (36) à base de microcapsules qui contient, dans un liant (38), une pluralité de microcapsules (40) qui comportent respectivement une enveloppe de capsule (42), un liquide porteur (44) enfermé dans l'enveloppe de capsule (42), et un pigment (46) non sphérique pouvant être orienté magnétiquement, pouvant tourner sensiblement librement dans la microcapsule et pouvant être orienté de manière réversible par un champ magnétique externe, la couche d'encre (36) à base de microcapsules contenant une zone de motif (14) à aspect visuel différent réalisé sous forme de motifs, de caractères ou d'une codification,
**caractérisé en ce que**
dans la zone de motif (14), les enveloppes de capsule (42) des microcapsules (40) sont endommagées, le liquide porteur (44) est sorti des enveloppes de capsule (42) et les pigments (46) sont immobiles dans les enveloppes de capsule (42) endommagées.

11. Élément de sécurité selon la revendication 10, **caractérisé en ce que** les pigments (46) sont réalisés sous forme de plaquettes, le rapport du plus grand au plus petit diamètre (rapport diamètre/épaisseur) des pigments (46) en forme de plaquettes étant de 4:1, de préférence de 10:1, et particulièrement de préférence situé entre 20:1 et 200:1.

12. Élément de sécurité selon la revendication 10 ou 11, **caractérisé en ce que** la couche d'encre (36) à base de microcapsules est appliquée sur une couche support conductrice d'informations, en particulier une couche obtenue par sérigraphie, par flexographie ou par impression en creux par gravure, et/ou **en ce que** la couche d'encre (36) à base de microcapsules est combinée avec une couche support thermochromique ou magnétique.

13. Élément de sécurité selon au moins une des revendications de 10 à 12, **caractérisé en ce que** les pigments (46) immobiles situés dans la zone de motif (14) sont orientés au moins partiellement parallèlement au plan de la couche d'encre (36).

14. Agencement de sécurité destiné à la protection de papiers de sécurité, documents de valeur, supports de données ou objets similaires, doté d'un élément de sécurité pouvant être fabriqué selon une des revendications de 1 à 9 ou d'un élément de sécurité selon une des revendications de 10 à 13, et d'un élément de vérification ayant une zone magnétique, cependant que, dans la zone magnétique, il y a de préférence du matériau magnétique sous forme de motifs, de lignes, de caractères ou d'une codification, et/ou que la zone magnétique est de préférence magnétisée sensiblement perpendiculairement au plan de l'élément de vérification.

15. Support de données doté d'un élément de sécurité pouvant être fabriqué selon une des revendications de 1 à 9, d'un élément de sécurité selon une des revendications de 10 à 13, ou d'un agencement de sécurité selon la revendication 14, cependant que, dans ce dernier cas, l'élément de sécurité et l'élément de vérification de l'agencement de sécurité sont agencés de préférence géométriquement de telle manière sur le support de données que l'élément de sécurité peut, par courbage ou par pliage du support de données, être placé au-dessus de l'élément de vérification.
